# EUROPÄISCHE PATENTSCHRIFT

(11) **EP 4 363 352 B1**
(45) Veröffentlichungstag und Bekanntmachung des Hinweises auf die Patenterteilung: **23.10.2024**
(21) Anmeldenummer: 22737716.5
(22) Anmeldetag: 30.06.2022
(51) Int. Cl.: B65G 1/04

(54) **VERFAHREN ZUM EINLAGERN ODER AUSLAGERN VON LAGERHILFSMITTELN**
METHOD FOR STORING OR RETRIEVING STORAGE AIDS
PROCÉDÉ DE STOCKAGE OU DE RÉCUPÉRATION D'AUXILIAIRES DE STOCKAGE

(30) Priorität: 08.07.2021 AT 505642021
(43) Veröffentlichungstag der Anmeldung: 08.05.2024
(73) Patentinhaber: Knapp AG, 8075 Hart bei Graz (AT)
(72) Erfinder: MATHI, Franz, 8075 Hart bei Graz (AT); PUNTIGAM, Wolfgang, 8075 Hart bei Graz (AT); GAILBERGER, Christoph, 8075 Hart bei Graz (AT)
(74) Vertreter: Schwarz & Partner Patentanwälte GmbH
(86) Internationale Anmeldenummer: PCT/AT2022/060235
(87) Internationale Veröffentlichungsnummer: WO 2023/279127

(56) Entgegenhaltungen:
- WO-A1-2017/064401
- US-A1- 2015 225 187
- US-A1- 2021 047 112

## Beschreibung

Die Erfindung betrifft ein Verfahren zum Einlagern oder Auslagern von Lagerhilfsmitteln gemäß dem Oberbegriff von Anspruch 1.

Automatisierte Lagersysteme sind auf dem Gebiet der Lagerlogistik bekannt, um Waren automatisiert in ein Warenlager mittels eines Lagerverfahrens einzulagern und aus diesem auszulagern. Derartige Lagersysteme und Lagerverfahren werden in der modernen Logistik verwendet um eine rasche, schnelle und individuelle Erfüllung von Bestellaufträgen zu ermöglichen. Hierzu umfassen Lagersysteme in der Regel Mittel zur Warenkommissionierung, um Bestellaufträge abzuhandeln, welche eine Vielzahl an verschiedenen Produkten umfassen. Derartige Lagersysteme finden jedoch auch als Lager beispielsweise in der Automobilindustrie Anwendung, wo beispielsweise eine Vielzahl von verschiedenen Komponenten in einem gemeinsamen Lager gelagert, und kurzfristig verfügbar sein müssen.

Im Stand der Technik sind Lagersysteme bekannt, welche in Form von Regallagern ausgeführt sind. In diesen werden Waren in Lagerplätzen gelagert, welche von den Regalen gebildet werden. Derartige Lagersysteme umfassen in der Regel sogenannte Regalbediengeräte, welche eine Einlagerung und eine Auslagerung von Waren in und aus den Lagerplätzen durchführen. US 2021/047112 A1 offenbart ein Verfahren gemäß dem Oberbegriff des Anspruchs 1.

Ein Nachteil bekannter Lagersysteme und Lagerverfahren liegt darin begründet, dass die Regalbediengeräte, welche die Waren einlagern und auslagern sich auf vorgegebenen Wegen im Lagersystem bewegen. Hierdurch entstehen Wartezeiten bei der Einlagerung und Auslagerung der Waren aus den Lagerplätzen, insbesondere wenn ein Regalbediengerät zuvor einen anderen Auftrag abhandeln muss. Des Weiteren kann es zu einer Anstauung von Waren, beispielsweise bei einer Übernahme oder Übergabe von Waren zwischen dem Lagersystem und einem Förderband kommen.

Die Aufgabe der Erfindung liegt somit darin, ein Verfahren zum Einlagern oder Auslagern von Lagerhilfsmitteln mit einem Shuttle in ein Regal eines automatisierten Lagersystems bereitzustellen, welches eine rasche und flexible Handhabung von Waren ermöglicht, und den Warendurchsatz erhöht.

Dies wird durch die Merkmale des erfindungsgemäßen Verfahrens zum Einlagern oder Auslagern von Lagerhilfsmitteln mit den Merkmalen von Anspruch 1 gelöst.

Das erfindungsgemäße Verfahren ist zum Einlagern oder Auslagern von Lagerhilfsmitteln mit einem Shuttle in ein Regal eines automatisierten Lagersystems ausgestaltet. Das Regal umfasst hierbei mehrere auf einem Untergrund aufgestellte Regalstützen und mehrere vertikal übereinander angeordnete Lagerebenen mit zwischen den Regalstützen angeordneten Lagerplätzen. Die Breite eines Lagerplatzes begrenzende benachbarte Regalstützen des Regals weisen am Untergrund eine lichte Weite auf, die kleiner als die Länge des Shuttles in einer Längsachse des Shuttles, und größer als die Breite des Shuttles in einer Querachse des Shuttles ist. Bei dem erfindungsgemäßen Verfahren werden die in weiterer Folge beschriebenen Schritte ausgeführt. Das Regal wird mit dem Shuttle auf dem Untergrund unterfahren, und das Shuttle wird an benachbarte Regalstützen des Regals angekoppelt. Das Shuttle führt einen vertikalen Aufstieg an diesen benachbarten Regalstützen bis auf die Höhe der Lagerebene des Lagerplatzes in welchen das Lagerhilfsmittel eingelagert, oder aus welchem das Lagerhilfsmittel ausgelagert werden soll durch. In weiterer Folge erfolgt ein Einlagern des Lagerhilfsmittels von dem Shuttle in den Lagerplatz oder ein Auslagern des Lagerhilfsmittels aus dem Lagerplatz auf das Shuttle. Zudem umfasst das erfindungsgemäße Verfahren den vertikalen Abstieg des Shuttles an den benachbarten Regalstützen bis auf den Untergrund. Erfindungsgemäß weist das Verfahren zudem die Schritte des Herausfahrens aus dem Regal und/oder des Hineinfahrens unter das Regal auf dem Untergrund durch das Shuttle mit einer Fahrrichtung entlang der Längsachse des Shuttles auf, sowie das Drehen des Shuttles um 90 Grad. Zudem weist das Verfahren den Schritt des Ankoppelns des Shuttles durch ein Heranfahren an nur zwei der benachbarten Regalstützen auf, wobei die Längsachse des Shuttles im Wesentlichen parallel zu einer Regalfront des Regals positioniert wird. Durch das Herausfahren aus dem Regal und/oder Hineinfahren unter das Regal auf dem Untergrund durch das Shuttle mit einer Fahrrichtung entlang der Längsachse des Shuttles, das Drehen des Shuttles um 90 Grad außerhalb des Regals sowie das Ankoppeln des Shuttles durch das Heranfahren an nur zwei der benachbarten Regalstützen wird der Vorteil erreicht, dass für den Einkoppelvorgang und den Weg von den oder zu den zwei Regalstützen ein geringer Platzbedarf erforderlich ist. Somit kann das Shuttle innerhalb des Lagersystems auf dem Untergrund immer den kürzesten Weg zu den Regalstützen und somit zu dem gewünschten Lagerplatz nehmen, wodurch die Einlagerungs- und Auslagerungsgeschwindigkeit wesentlich erhöht wird. Zudem wird der Warendurchsatz im den Lagersystem durch das erfindungsgemäße Verfahren wesentlich erhöht, da für die einzelnen Shuttles eine hohe Anzahl an möglichen Anfahrtswegen bereitgestellt wird, wodurch sich die Shuttles leicht ausweichen können, und nicht auf die Vorbeifahrt von anderen Shuttles warten müssen.

Vorzugsweise wird in dem erfindungsgemäßen Verfahren das Shuttle vor dem Ankoppeln an die nur zwei benachbarten Regalstützen durch ein Heranfahren an die nur zwei benachbarten Regalstützen mit einer Fahrtrichtung entlang der Querachse des Shuttles vor die nur zwei benachbarten Regalstützen positioniert. Hierdurch wird der Vorteil erreicht, dass das Shuttle direkt an die Regalstützen heranfahren und ein einfacher Mechanismus zum Ankoppeln an die beiden benachbarten Regalsteher realisiert werden kann.

Gemäß einer bevorzugten Ausführungsform des erfindungsgemäßen Verfahrens wird das Shuttle nach dem Drehen des Shuttles und vor dem Ankoppeln an die nur zwei benachbarten Regalstützen mit einer Fahrt in Fahrtrichtung der Längsachse des Shuttles positioniert. Hierdurch können auch die Regalgassen zur Fahrt des Shuttles genutzt werden. Vorzugsweise bewegt sich das Shuttle nach dem Unterfahren des Regals auf dem Untergrund in einem Gegenverkehrsbereich mit weiteren Shuttles, welche zu dem Shuttle eine im Wesentlichen entgegengesetzt orientierte Fahrtrichtung aufweisen. Hierdurch kann die Fahrtrichtung der einzelnen Shuttles aufeinander abgestimmt werden, und die einzelnen Shuttles können sich autonom im Lagersystem bewegen.

Gemäß der bevorzugten Ausführungsform des erfindungsgemäßen Verfahrens wird der vertikale Aufstieg und/oder der vertikale Abstieg des Shuttles an den nur zwei benachbarten Regalstützen durch eine Reibradkopplung durchgeführt. Hierdurch wird ein besonders rascher Ein- und Auskoppelvorgang mit einer konstruktiv simplen und robusten Einkopplungsmechanik gewährleistet.

Vorzugsweise weist das Shuttle ein Lastaufnahmemittel zur Aufnahme des Lagerhilfsmittels auf, wobei beim Einlagern des Lagerhilfsmittels von dem Shuttle in den Lagerplatz das Lastaufnahmemittel mit dem von dem Lastaufnahmemittel aufgenommenen Lagerhilfsmittel von einer an dem Shuttle vorgesehenen Führung für das Lastaufnahmemittel in eine an dem Lagerplatz vorgesehene Führung für das Lastaufnahmemittel verlagert wird. Beim Auslagern des Lagerhilfsmittels von dem Lagerplatz auf das Shuttle wird das Lagerhilfsmittel von dem Lastaufnahmemittel aufgenommen und das Lastaufnahmemittel mit dem aufgenommenen Lagerhilfsmittel vorzugsweise von der an dem Lagerplatz vorgesehenen Führung für das Lastaufnahmemittel in die an dem Shuttle vorgesehene Führung für das Lastaufnahmemittel verlagert. Hierdurch wird sichergestellt, dass das Lagerhilfsmittel sicher eingelagert und ausgelagert wird. Das Lastaufnahmemittel wird zudem vorzugsweise mittels einer Steuerungseinheit in Abhängigkeit von der Position des Shuttles in dem Lagersystem gesteuert. Hierdurch wird die Koordination zwischen Lastaufnahmemittel, Lagerhilfsmittel und Shuttle verbessert.

Das automatisierte Lagersystem, in welchem das erfindungsgemäße Verfahren umgesetzt wird, umfasst zumindest ein Regal mit mehreren auf einem Untergrund aufgestellten Regalstützen. Das Regal weist mehrere vertikal übereinander angeordneten Lagerebenen auf, wobei jede Lagerebene zumindest einen Lagerplatz umfasst. Das Lagersystem weist zudem mehrere in die Lagerplätze einlagerbare Lagerhilfsmittel auf. Lagerhilfsmittel umfassen beispielsweise Lagerbehälter, Lagerpaletten, Trays, Kartons und ähnliche auf dem Gebiet der Logistik bekannte Vorrichtungen zur Aufnahme von Waren. Das Lagersystem umfasst darüber hinaus zumindest ein Shuttle mit einer Antriebseinheit, wobei das Shuttle mittels der Antriebseinheit auf dem Untergrund beweglich ist, und welches dazu ausgebildet ist ein Lagerhilfsmittel aufzunehmen und zu einem der Lagerplätze zuzuführen und von diesem abzuführen. Des Weiteren umfasst das Lagersystem zumindest ein Lastaufnahmemittel, welches dazu ausgebildet ist, das Lagerhilfsmittel von dem Shuttle in den Lagerplatz einzulagern und von dem Lagerplatz auf das Shuttle auszulagern. Zwischen dem Untergrund und einer untersten Lagerebene des Regals ist ein Transferbereich vorgesehen, wobei der Transferbereich eine Höhe aufweist, welche zumindest einer Höhe eines Shuttles mit einem von dem Shuttle aufgenommenen Lagerhilfsmittel entspricht. Das Shuttle ist entlang zumindest einer der Regalstützen mittels der Antriebseinheit selbstständig verfahrbar.

Durch die Ausgestaltung des automatisierten Lagersystems wird ein zusätzlicher Transferbereich bereitgestellt, welcher unterhalb der untersten Lagerebene vorgesehen ist. Somit können die Shuttles auch unterhalb der untersten Lagerebene vorzugsweise auf dem Untergrund fahren. Hierdurch wird eine wesentlich umfangreichere Flexibilität der möglichen Wege der Shuttles im Lagersystems erreicht, als dies mit Lagersystemen im Stand der Technik möglich ist. Durch die erhöhte Anzahl an möglichen Wegen, welche für ein Shuttle während der Zufuhr oder der Abfuhr eines Lagerhilfsmittels von einem Lagerplatz zur Verfügung stehen, kann der Warendurchsatz und die Geschwindigkeit des Lagersystems wesentlich im Vergleich zum Stand der Technik erhöht werden. Durch die Verfahrbarkeit des Shuttles entlang zumindest einer der Regalstützen wird es ermöglicht dass das Shuttle das Lagerhilfsmittel aus der Transferebene in eine der Lagerebenen transferiert.

Vorzugsweise weisen die Regalstützen im Bereich des Transferbereichs einen Einkoppelbereich zur Aufnahme des Shuttles auf. Hierdurch wird der Vorteil erreicht, dass das Shuttle unabhängig von den Regalstützen im Transferbereich auf dem Untergrund verfahrbar, und gleichzeitig in die Regalstützen einkoppelbar ist.

Gemäß der bevorzugten Ausführungsvariante des Lagersystems weisen die Lagerplätze jeweils eine Führung zur Führung des Lastaufnahmemittels auf. Hierdurch kann das Lastaufnahmemittel in die Führung eingreifen, und ein Lagerhilfsmittel auf einem Lagerplatz positionieren oder von dem Lagerplatz entnehmen und an das Shuttle übergeben. Vorzugsweise ist das Lastaufnahmemittel unabhängig vom Shuttle ausgebildet. Alternativ kann das Lastaufnahmemittel auch mechanisch und/oder elektrisch mit dem Shuttle gekoppelt sein.

Die Antriebseinheit des Shuttles weist vorzugsweise zumindest zwei Antriebsräder zur Fortbewegung des Shuttles auf dem Untergrund auf. Hierdurch kann das Shuttle auf dem Untergrund Drehbewegungen und kurvenförmige Richtungsänderungen ausführen.

Gemäß der bevorzugten Ausführungsvariante des Lagersystems weist die Antriebseinheit des Shuttles eine Regalstützenkopplungseinheit auf, wobei die Regalstützenkopplungseinheit zur Kopplung des Shuttles mit der Regalstütze ausgebildet ist. Hierdurch wird eine einfache, robuste und lösbare Verbindung des Shuttles mit der Regalstütze ermöglicht. Vorzugsweise ist die Regalstützenkopplungseinheit dazu ausgebildet ist einen Reibschluss mit der Regalstütze zu bilden. Hierdurch können einfach herzustellende und kostengünstige Rohrprofile oder Walzprofile für die Regalstütze verwendet werden. Vorteilhafte Ausgestaltungen des erfindungsgemäßen Verfahrens zum Einlagern oder Auslagern von Lagerhilfsmitteln in ein Regal eines automatisierten Lagersystems sowie alternative Ausführungsvarianten des Verfahrens und des Lagersystems werden in weiterer Folge anhand der Figuren näher erläutert.
Figur 1 zeigt ein automatisiertes Lagersystem in einer perspektivischen Darstellung mit einem Regal und mehreren Shuttles, in welchem das erfindungsgemäße Verfahren eingesetzt wird.
Figur 2 zeigt eine Lagergasse des Regalsystems gemäß Figur 1, mit zwei Regalen, welche die Lagergasse begrenzen.
Figur 3a bis Figur 3e zeigen ein Shuttle des automatisierten Lagersystems in unterschiedlichen Ansichten.
Figur 4a bis Figur 4c zeigen einen Ausschnitt des Regals des Lagersystems mit mehreren Lagerplätzen, und Führungen, in welchen Lastaufnahmemittel aufgenommen sind.
Figur 5a bis Figur 5e zeigen verschiedene Ansichten mehrerer Shuttles, welche mittels jeweils einer Regalstützenkopplungseinheit mit einer Stütze gekoppelt sind, welche eine Krümmung aufweist.
Figur 6a und Figur 6b zeigen verschiedene Konfigurationen eines Kopplungsarms eines Shuttles des Lagersystems.
Figur 7 zeigt das automatisierte Lagersystem in einer Ansicht von oben mit mehreren Arbeitsplätzen.

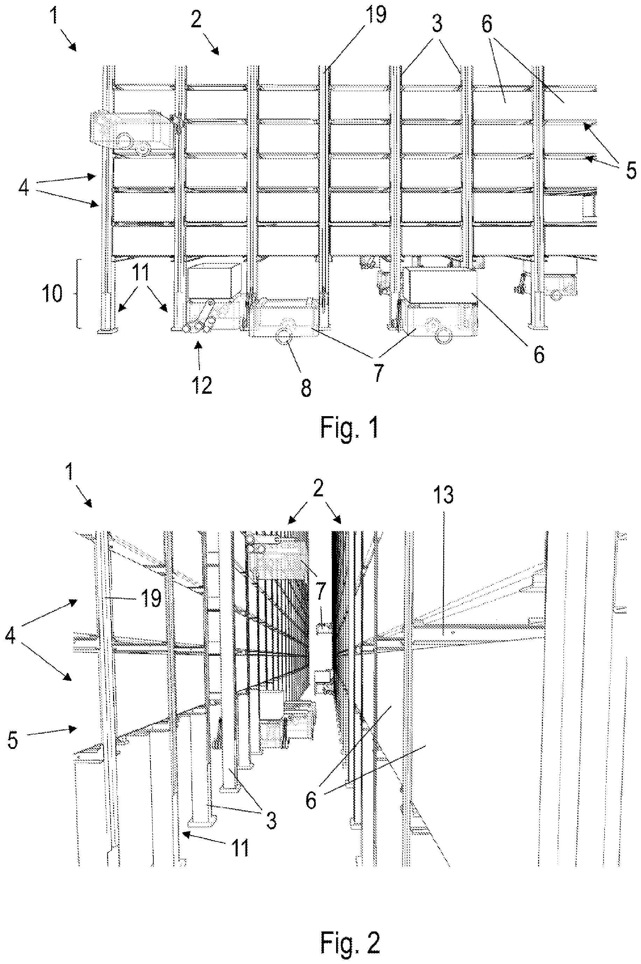

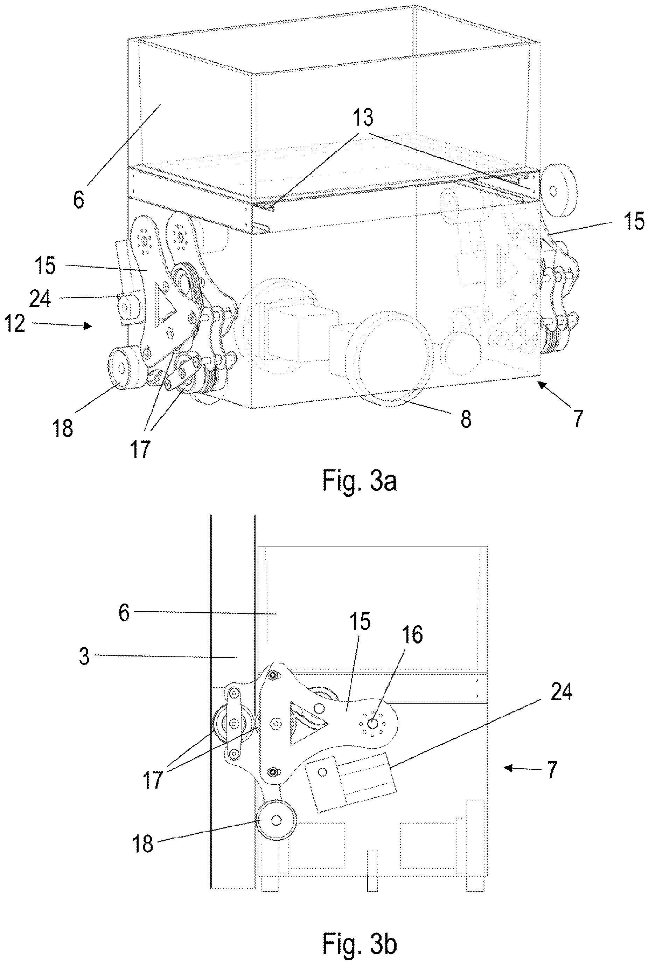

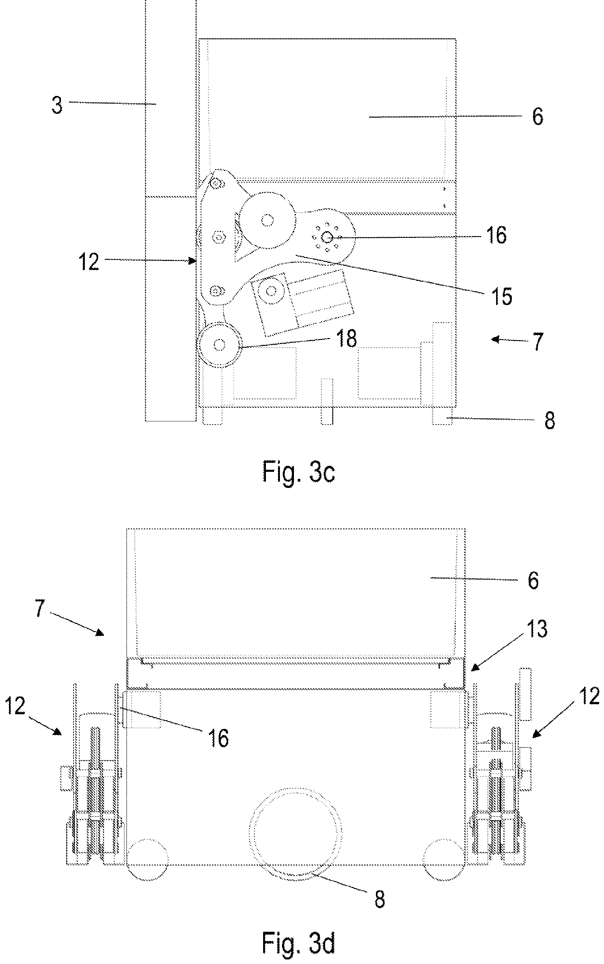

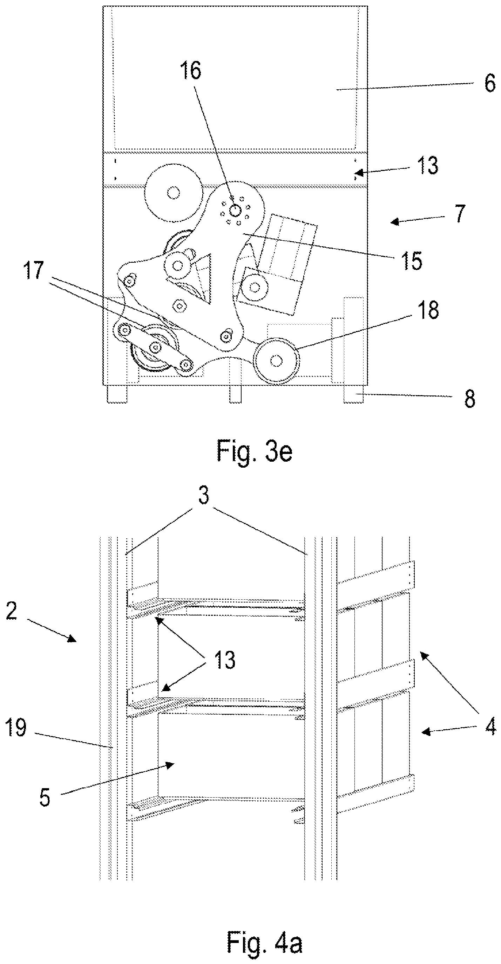

Das im erfindungsgemäßen Verfahren eingesetzte automatisierte Lagersystem 1 ist in einer beispielhaften Ausführungsvariante in Figur 1 dargestellt, und umfasst zumindest ein Regal 2 mit mehreren auf einem Untergrund aufgestellten, zumindest abschnittsweise vertikal verlaufenden Regalstützen 3. Vorzugsweise umfasst das Lagersystem 1 mehrere Regale, wie in Figur 2 ersichtlich. Das Regal 2 weist mehrere vertikal übereinander angeordnete Lagerebenen 4 auf, wobei jede Lagerebene 4 zumindest einen Lagerplatz 5 umfasst. Zudem umfasst das Lagersystem 1 mehrere Lagerhilfsmittel 6, welche in die Lagerplätze 5 einlagerbar sind. Das Lagersystem 1 umfasst zumindest ein Shuttle 7 mit einer Antriebseinheit, wobei das Shuttle 7 mittels der Antriebseinheit auf dem Untergrund beweglich ist. Die Antriebseinheit umfasst zudem vorzugsweise zumindest einen Elektromotor. Zudem umfasst die Antriebseinheit, wie in den Figuren ersichtlich, vorzugsweise zwei Antriebsräder 8, welche zu Fortbewegung des Shuttles 7 auf dem Untergrund dienen. Die Regalstützen 3 sind vorzugsweise mittels eines Strangwalzverfahrens, oder eines Pressverfahrens hergestellt. Alternative Varianten von Regalstützen 3 sind dem Fachmann allgemein bekannt. Das Shuttle 7 ist dazu ausgebildet, ein Lagerhilfsmittel 6 aufzunehmen und zu einem der Lagerplätze 5 zuzuführen und von diesem abzuführen. Hierzu weist das Shuttle 7 vorzugsweise eine Ladefläche auf, welche in Figur 1 und Figur 3a ersichtlich ist. Alternativ kann das Shuttle 7 auch einen Aufnahmeraum für das Lagerhilfsmittel 6 aufweisen, welcher für die Aufnahme von Lagerhilfsmittel 6 ausgebildet ist. Das Lagersystem 1 umfasst zudem ein Lastaufnahmemittel 9, welches dazu ausgebildet ist, das Lagerhilfsmittel 6 von dem Shuttle 7 in den Lagerplatz 5 einzulagern und von dem Lagerplatz 5 auf das Shuttle 7 auszulagern. Das Lastaufnahmemittel 9 wird weiter unten im Detail erläutert.

Zwischen dem Untergrund und einer untersten Lagerebene 4 des Regals ist ein Transferbereich 10 vorgesehen.

Der Transferbereich 10 weist eine Höhe auf, welche zumindest einer Höhe des Shuttles mit einem von dem Shuttle 7 aufgenommenen Lagerhilfsmittel 6 entspricht. Hierdurch kann sich das Shuttle 7 unterhalb der untersten Lagerebene 4 bewegen, und durch das Regal 2 hindurchfahren. Zudem ist das Shuttle 7 entlang zumindest einer der Regalstützen 3 mittels der Antriebseinheit verfahrbar. Hierdurch kann das Shuttle 7 jede beliebige Lagerebene 4 erreichen. Vorzugsweise ist ein Abstand von zwei benachbarten Regalstützen 3 derart gewählt, dass ein Shuttle 7 durch diese hindurchfahren kann. Gemäß der in den Figuren dargestellten Ausführungsvariante ist der Abstand derart gewählt, dass eine Achse der Antriebsräder 8 des Shuttles 7 beim Bewegen des Shuttles 7 unterhalb der untersten Lagerebene 4 parallel zu einem Abstand von zwei einen Lagerplatz 5 begrenzenden Regalstützen 3 ausgerichtet ist. Im Zuge einer Kopplung des Shuttles 7 an die Regalstütze 3 führt das Shuttle 7 eine Wende von im Wesentlichen 90 Grad durch, sodass die Achse der Antriebsräder 8 im Wesentlichen parallel zum Verlauf des Regals beispielsweise normal auf eine Regalgasse ausgerichtet ist.

Gemäß der bevorzugten Ausführungsvariante des Lagersystems 1 weisen die Regalstützen 3 im Bereich des Transferbereichs 10 einen Einkoppelbereich 11 zur Aufnahme eines Shuttles 7 auf. Der Einkoppelbereich 11 ist in Figur 1 und in Figur 2 ersichtlich. Vorzugsweise ist der Einkoppelbereich 11 als Ausnehmung in einem Profil der Regalstützen 3 im Transferbereich 10 ausgeführt. Vorzugsweise weist die Antriebseinheit des Shuttles 7 eine Regalstützenkopplungseinheit 12 auf, wobei die Regalstützenkopplungseinheit 12 zur Kopplung des Shuttles mit der Regalstütze 3 ausgebildet ist. Die Regalstützenkopplungseinheit 12 ist ebenfalls an den Shuttles in Figur 1 ersichtlich. Zudem ist die Regalstützenkopplungseinheit 12 in den Figuren 3a bis 3e ersichtlich, und wird weiter unten im Detail beschrieben.

Das Shuttle 7 kann beispielsweise mittels der Regalstützenkopplungseinheit 12 in diesen Einkoppelbereich 11 eingreifen, wodurch das Shuttle 7 an die jeweilige Regalstütze 3 gekoppelt wird. Die Regalstützen 3 des Lagersystems 1 weisen vorzugsweise keine gesonderten Mechanismen oder Vorrichtungen auf, welche eine Fortbewegung des Shuttles 7 an der Regalstütze 3 ermöglichen. Gemäß dieser Ausführungsvariante ist die Regalstützenkopplungseinheit 12 dazu ausgebildet, einen Reibschluss mit der jeweiligen Regalstütze 3 zu bilden, um eine Kraftübertragung zu ermöglichen.

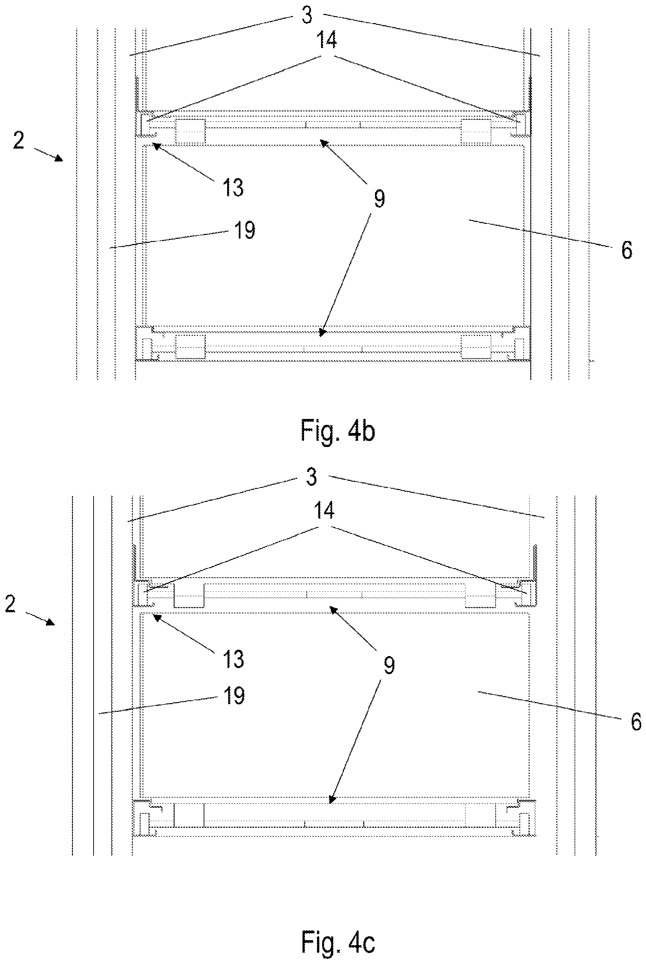

Das Lagersystem 1 umfasst das Lastaufnahmemittel 9, welches in einer bevorzugten Ausführungsvariante in Figur 4b und 4c ersichtlich ist. Die Lagerplätze 5, welche in den Figuren 4a bis 4c dargestellt sind, umfassen vorzugsweise jeweils eine Führung 13 zur Führung des Lastaufnahmemittels 9. Diese Führungen 13 sind gemäß der in den Figuren ersichtlichen Ausführungsvariante als Schienenpaar ausgeführt, in welchen das Lastaufnahmemittel 9 läuft. Zudem weist das Shuttle 7, wie in Figur 3a ersichtlich, ebenfalls eine Führung 13 auf, welche als Schienenpaar ausgeführt ist, und in welche das Lastaufnahmemittel 9 eingeführt werden kann. Das Lastaufnahmemittel 9 weist vorzugsweise zwei Paare an Laufrädern 14 auf, welche in den Schienen der Führungen 13 laufen. Somit kann das Lastaufnahmemittel 9 von den Führungen 13 in dem Regal 2 im Bereich der Lagerplätze 5 einfach in die Führung 13 des Shuttles 7 übergeführt werden. Das Lastaufnahmemittel 9 ist vorzugsweise mit dem Shuttle mechanisch und/oder elektrisch verbunden. Hierbei kann das Lastaufnahmemittel 9 beispielsweise einen Elektromotor als Antrieb umfassen, wobei das Lastaufnahmemittel 9 von dem Shuttle 7 mittels einer Leitungsverbindung mit Strom versorgt wird. Alternativ kann das Lastaufnahmemittel 9 einen eigenen Akku aufweisen. Zudem kann das Lastaufnahmemittel 9 eine Steuerungseinheit umfassen. Die Steuerungseinheit ist dazu ausgebildet das Lastaufnahmemittel 9 in Abhängigkeit von der Position des Shuttles in dem Lagersystem 1 zu steuern. Gemäß einer weiteren, alternativen Ausführungsvariante kann das Lastaufnahmemittel 9 mit einer mechanischen Antriebsverbindung mit dem Shuttle 7 verbunden sein. Diese kann beispielsweise eine Kurbelwelle, einen Scherenantrieb, einen Kettenantrieb oder ähnliches umfassen. Weitere mechanische Antriebsverbindungen ergeben sich für den Fachmann aus diesem beispielhaften Verweis. Des Weiteren umfasst das Lastaufnahmemittel 9 vorzugsweise Auflagebereiche für zumindest ein Lagerhilfsmittel 6. Wird ein Lagerhilfsmittel 6 von einem Shuttle 7 zu einem Lagerplatz 5 zugeführt, wird dieser mittels des Lastaufnahmemittels vom Shuttle 7 zu dem jeweiligen Lagerplatz 5 transferiert, beziehungsweise bei der Auslagerung von dem Lagerplatz 5 auf das Shuttle 7 transferiert. Hierzu umfasst das Lastaufnahmemittel 9 eine Hubmechanik oder Hubpneumatik, welche ein Anheben des Lagerhilfsmittels 6 ermöglicht, sodass dieser an den Auflagebereichen anliegt und mittels des Lastaufnahmemittels 9 transferiert werden kann. Alternativ kann das Lastaufnahmemittel 9 auch eine Greifmechanik zur Manipulation des Lagerhilfsmittels 6 umfassen. In einer weiteren alternativen Ausführungsvariante des Lastaufnahmemittels 9 umfasst dieses einen Kettenförderer, welcher ein Lagerhilfsmittel 6 aufnimmt, während das Lastaufnahmemittel 9 unter das Lagerhilfsmittel 6 geschoben wird. Figur 4b zeigt zwei übereinander angeordnete Lagerplätze 5 mit darin eingelagerten Lagerhilfsmitteln 6, wobei unter jedem der Lagerhilfsmittel 6 ein Lastaufnahmemittel 9 positioniert ist. Zum Auslagern wird, wie in Figur 4c dargestellt, mittels der Hubmechanik des Lastaufnahmemittels 9 das jeweilige Lagerhilfsmittel 6 angehoben, wodurch ein Transfer des Lagerhilfsmittels 6 beispielsweise auf ein nicht dargestelltes Shuttle 7 ermöglich wird. Andere verwendbare Hubmechanismen sind dem Fachmann allgemein bekannt. Das Lastaufnahmemittel 9 kann beispielsweise auch einen oder mehrere Kettenantriebe und/oder einen oder mehrere Riemenantriebe zum Verschieben der Lagerhilfsmittel 6 umfassen. Die Ketten der Kettenantriebe und/oder die Riemen der Riemenantriebe können auch die Auflagebereiche bilden. Die Führungen 13 der Lagerplätze 5 sind in Figur 4a im Detail dargestellt. In Figur 4a ist auch ersichtlich, das mittels des Lastaufnahmemittels 9 eine beliebige Lagertiefe in einer Lagerebene 4 des Regals 2 erreicht werden kann. Mittels des Lastaufnahmemittels 9 kann ein Lagerhilfsmittel 6 in dem Regal 2 entlang der Führungen 13 verschoben werden, wodurch mehrere Lagerhilfsmittel 6 hintereinander in dem Regal 2 gelagert werden können. Des Weiteren ermöglicht diese Konstruktion, dass ein Lastaufnahmemittel 9 das gesamte Regal 2 entlang der Führungen 13 durchlaufen kann. Die Lastaufnahmemittel 9 sind in einer bevorzugten Ausführungsform des Lagersystems 1 von den Shuttles 7 unabhängig ausgeführt, und können sich in einer Lagerebene 4 unabhängig von der Position eines spezifischen Shuttles 7 bewegen. Die Lastaufnahmemittel 9 können gemäß dieser Ausführungsvariante auch, wie in Figur 1 dargestellt, im Regal 2 verbleiben, während die Shuttles 7 Lagerhilfsmittel 6 zu einer Lagerebene 4 zuführen und/oder abführen. Alternativ kann ein Lastaufnahmemittel 9 aus den Führungen des Regals 2 in die Führung 13 des Shuttles 7 transferiert werden, um mittels des Shuttles 7 beispielsweise zu einer anderen Lagerebene 4 zugeführt zu werden.

In weiterer Folge wird das Shuttle 7 und insbesondere die Regalstützenkopplungseinheit 12 zur Kopplung des Shuttles 7 mit der Regalstütze 3 beschrieben. Wie in Figur 1 und Figur 2 ersichtlich umfassen die Shuttles 7 des Lagersystems 1 jeweils zumindest eine Regalstützenkopplungseinheit 12, welche ein Einkoppeln des Shuttles 7 in oder an eine Regalstütze 3 ermöglich, wodurch das Shuttle 7 die Regalstütze 3 erklimmen kann, und ein Lagerhilfsmittel 6 und/oder ein Lastaufnahmemittel 9 zu einer bestimmten Lagerebene 4 transportieren kann. Die Verbindung der Regalstützenkopplungseinheit 12 mit der Regalstütze 3 wird vorzugsweise mittels eines Reibschlusses hergestellt, wodurch die Regalstütze 3 als einfaches Profil vorzugsweise Walzprofil ausgebildet sein kann, und keine Notwendigkeit für zusätzliche mechanische Komponenten besteht, welche an den Regalstützen 3 vorgesehen sein müssen, um einen Transfer der Shuttles 7 entlang der Regalstützen 3 zu ermöglichen.

In den Figuren 3a bis 3e ist das Shuttle 7 mit der Regalstützenkopplungseinheit 12 im Detail dargestellt. In der dargestellten Ausführungsvariante des Shuttles 7 umfasst die Regalstützenkopplungseinheit 12 an zwei gegenüberliegenden Seiten des Shuttles 7 jeweils einen Kopplungsarm 15. Jeder der Kopplungsarme 15 ist mit dem Shuttle 7 an einem Drehpunkt 16 schwenkbar verbunden. Hierdurch wird es ermöglicht, dass die Kopplungsarme 15 an dem Shuttle 7 eine Drehbewegung ausführen, und das Shuttle 7 mit einem eventuell von diesem aufgenommenen Lagerhilfsmittel 6 dennoch in einer aufrechten Ausrichtung verbleibt. Zur Durchführung des Lageausgleichs des Shuttles 7 kann auch ein Stellmotor 24 vorgesehen sein, welcher am Drehpunkt 16 angreift.

Jeder der Kopplungsarme 15 umfasst mehrere Rollen, wobei zumindest manche der Rollen in einem an einer der Regalstützen 3 eingekoppelten Zustand des Shuttles an der Regalstütze 3 anliegen. Figur 3a zeigt eine beispielhafte Ausführung des Shuttle 7 in einem ausgekoppelten, und die Figuren 3b und 3c zeigen das Shuttle 7 in einem an einer Regalstütze 3 eingekoppelten Zustand beziehungsweise im Zuge der Einkopplung. Figur 3b zeigt hierbei einen Querschnitt durch die Regalstütze, und Figur 3c zeigt die Regalstütze 3 in einer Außenansicht.

In der in den Figuren dargestellten Ausführungsvariante der Regalstützenkopplungseinheit 12 umfasst der Kopplungsarm 15 zwei Antriebsrollen 17, und eine Führungsrolle 18. Die beiden Antriebsrollen 17 klemmen hierbei die Regalstütze 3 zumindest teilweise im Zuge des Einkopplungsvorgangs ein, und werden vorzugsweise mittels eines Kettenantriebs oder eines Riemenantriebs angetrieben. Der Kettenantrieb beziehungsweise der Riemenantrieb sind hierbei vorzugsweise mit der Antriebseinheit des Shuttles 7 verbunden. Der Kopplungsarm 15 umfasst zudem vorzugsweise die Führungsrolle 18, welche beabstandet von den beiden Antriebsrollen 17 am Kopplungsarm 15 angeordnet ist. Zumindest eine der Antriebsrollen 17 ist hierbei schmäler ausgeführt als die Führungsrolle 18. Nähert sich das Shuttle 7 an die Regalstütze 3 an, ermöglicht der Einkoppelbereich 11 der Regalstütze 3, dass eine der Antriebsrollen 17 in einen Innenbereich einer als Hohlprofil ausgeführten Regalstütze 3 eingreift. Hierzu ist der Einkoppelbereich 11 als Öffnung in einer Seitenwand der Regalstütze 3 ausgeführt. Darüber hinaus umfasst die Regalstütze 3 einen Schlitz 19, welcher im Wesentlichen entlang der gesamten Höhe der Regalstütze 3 verläuft. Der Schlitz 19 ist schmäler ausgeführt als die Öffnung im Einkoppelbereich 11, ermöglicht jedoch eine Durchführung des Riemens des Riemenantriebs beziehungsweise der Kette des Kettenantriebs von einem Außenbereich der Regalstütze 3 in den Innenbreich. Liegt die Führungsrolle 18 an die Regalstütze 3 an, wird der Kopplungsarm 15 derart verschwenkt, dass eine der Antriebsrollen 17 im Innenbereich der Regalstütze 3 angeordnet ist, und eine der Antriebsrollen 17 von außen an die Regalstütze 3 anliegt. Dieser Zustand ist in Figur 3b ersichtlich. Da das Gewicht des Shuttles 7 mit einem eventuellen Lagerhilfsmittel 6 im Wesentlichen an einem den Antriebsrollen 17 gegenüberliegenden Ende des Kopplungsarms 15 anliegt, wird eine Klemmkraft auf die Regalstütze 3, beziehungsweise hohe Normalkräfte auf die Antriebsrollen 17 ausgeübt, wodurch eine große Reibungskraft zwischen den Antriebsrollen 17 und der Regalstütze 3 erzeugt wird. Diese Reibungskraft wird zur Fortbewegung des Shuttles 7 entlang der Regalstützen 3 genutzt.

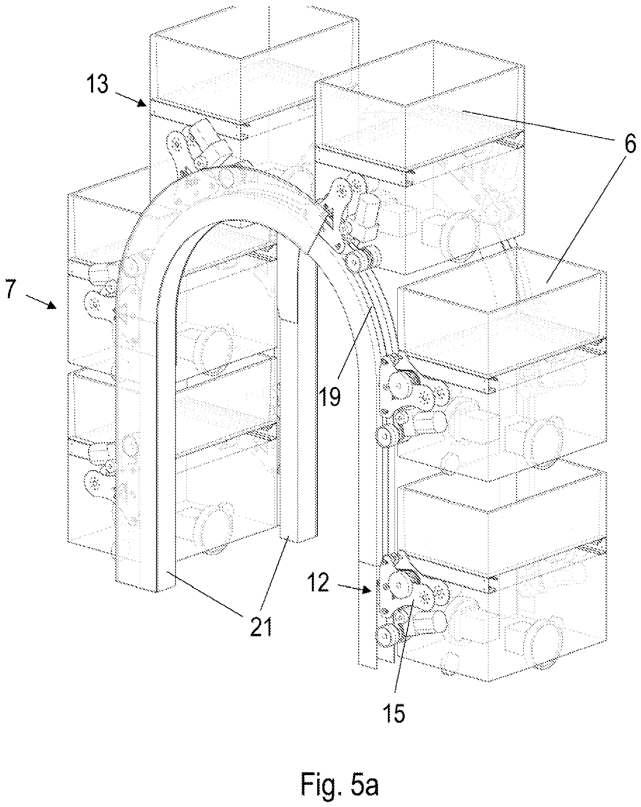

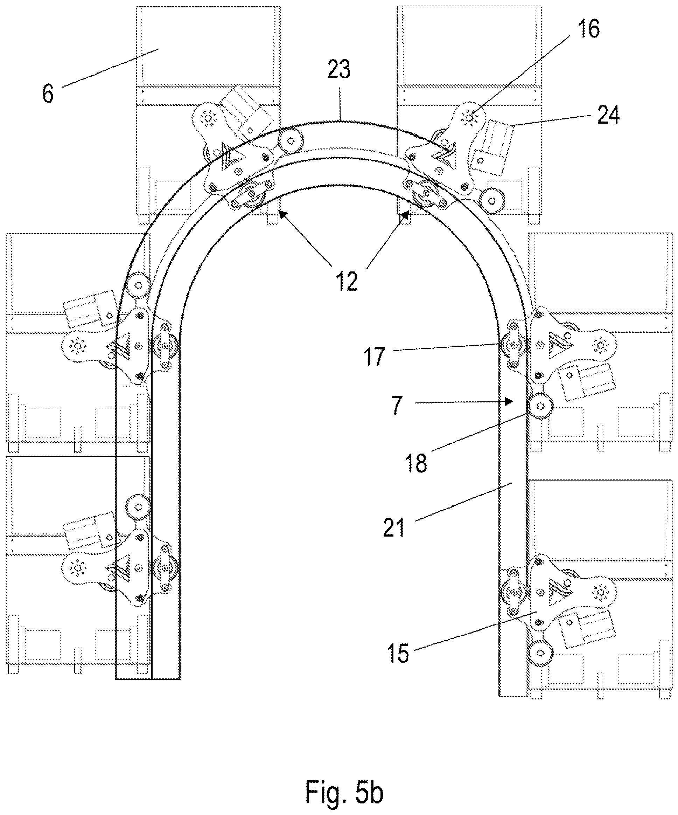

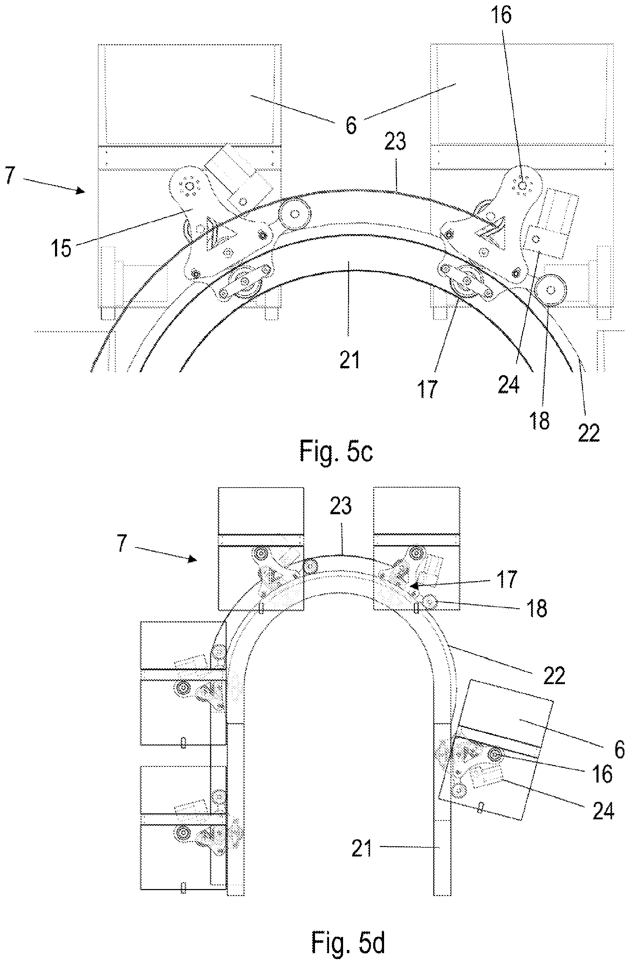

Die Ausgestaltung des Shuttles 7 mit der Regalstützenkopplungseinheit 12 ermöglicht es zudem, das Shuttle 7 entlang einer Kurve beziehungsweise eines Bogens einer Stütze 21 zu führen. Die Stütze 21 ist vorzugsweise konstruktiv wie die oben beschriebene Regalstütze 3 ausgeführt, wobei die Stütze 21 zusätzlich einen Bogen beziehungsweise eine Kurve umfasst. Dies ist in den Figuren 5a bis 5e ersichtlich. Da das Shuttle 7 schwenkbar mit dem Kopplungsarm 15 verbunden ist, ermöglicht die Regalstützenkopplungseinheit 12 einen Lageausgleich des Shuttles 7 in Relation zum Verlauf der Stütze 21 beim Durchfahren des Bogens. Hierbei wird es ermöglicht die Stütze in einer Kurve zu führen, wobei das Shuttle 7 mit einem von diesem aufgenommenen Lagerhilfsmittel 6 selbstständig einen Lageausgleich durchführt. Hierdurch behält das Shuttle 7 eine aufrechte Orientierung bei, unabhängig vom Verlauf der Stütze 21. Zur Durchführung des Lageausgleichs kann auch der Stellmotor 24 vorgesehen sein, welcher am Drehpunkt 16 zwischen dem Shuttle 7 und dem Kopplungsarm 15 angreift, und das Shuttle 7 aktiv gegenüber dem Kopplungsarm 15 verschwenkt. Die Verschwenkung des Shuttles 7 beim Durchfahren des Bogens der Stutze 21 ist in den Figuren 5c und 5d dargestellt. Zudem kann der Stellmotor 24 eine Lageänderung des Shuttles 7 auch an einer Position des Shuttles 7 an einem im Wesentlichen vertikal verlaufenden Abschnitt der Stütze 21 ermöglichen, wie in Figur 5d ersichtlich. Dies ermöglicht eine einfache ergonomische Entnahme oder ein einfaches ergonomisches Einbringen von Waren in das Lagerhilfsmittel 6.

Beim Durchfahren des Bogens der Stütze 21 ändert sich aufgrund der Schwerkraft und der Ausrichtung des Kopplungsarms 15 die Last auf die Antriebsrollen 17 und die Führungsrolle 18. Um eine hohe und gleichmäßige Klemmkraft der Antriebsrollen 17 an der Stütze 21 zu gewährleisten ist es vorteilhaft zu gewährleisten, dass die hohen Normalkräfte, welche auf die Antriebsrollen 17 wirken auch beim Durchfahren des Bogens aufrecht zu erhalten. Dies wird durch eine in Figur 5d ersichtliche innere Rollenführung 22 und eine äußere Rollenführung 23 gewährleistet, welche mit der Stütze 21 verbunden sind, und welche dazu ausgebildet sind die Führungsrolle 18 zu führen. Beim Eintritt des Shuttles 7 in den Bogen wird die Führungsrolle 18 durch die innere Rollenführung 22 auf eine Kurve gezwungen, welche im Vergleich zu jenem Bereich der Stütze 21, welcher von den Antriebsrollen 17 geklemmt wird, einen vergrößerten Radius aufweist. Im Zuge des Durchlaufens des Bogens greift die Führungsrolle 18 zudem in die äußere Rollenführung 23 ein, welche der inneren Rollenführung 22 entlang des Bogens zumindest abschnittsweise gegenüberliegt. Hierdurch wird gewährleistet, dass die Führungsrolle 18 nicht von der inneren Rollenführung 22 abhebt. Die Führungsrolle 18 verläuft entlang des Bogens der Stütze 21 somit zumindest abschnittsweise zwischen der inneren Rollenführung 22 und der äußeren Rollenführung 23. Hierdurch wird gewährleistet, dass die Antriebsrollen 17 im Wesentlichen während des gesamten Durchlaufens des Bogens der Stütze 21 eine Klemmkraft auf die Stütze ausüben, welche normal beziehungsweise im rechten Winkel zu der Stütze 21 orientiert ist. Hierdurch wird eine hohe Reibungskraft zwischen der Stütze 21 und den Antriebsrollen 17 gewährleistet, sodass ein Durchrutschen der Antriebsrollen 17 an der Stütze 21 verhindert wird.

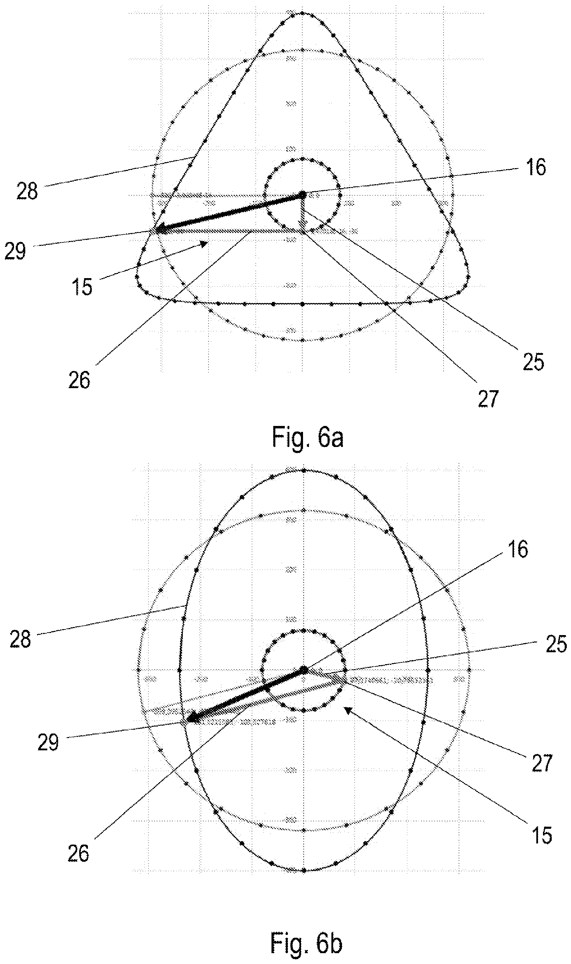

Gemäß einer in Figur 6a und Figur 6b schematisch dargestellten Ausführungsvariante des Kopplungsarms 15 umfasst der Kopplungsarm 15 ein Gelenk 27 zwischen den Antriebsrollen 17 und dem Drehpunkt 16, sowie einen ersten Teilarm 25 und einen zweiten Teilarm 26. Hierdurch wird der Vorteil erreicht, dass ein Abstand zwischen den Antriebsrollen 17 und dem Drehpunkt 16 des Kopplungsarms 16 mittels des Gelenks 27, vorzugsweise kontinuierlich variiert werden kann. Durch die Stellung des Gelenks 27 kann eine Kurve 28, welche ein Angriffspunkt 29 der Antriebsrollen 17 in Relation zum Drehpunkt 16 folgen kann durch eine Veränderung der Geometrie des Kopplungsarms 15 variiert werden. Figur 6a und Figur 6b zeigen zwei verschiedene beispielhafte Kurven 29, welchen der Angriffspunkt 29 gemäß dieser Ausführungsvariante folgen kann. Hierdurch wird der Vorteil erreicht, dass die Lage des Angriffspunkts 29 derart gewählt werden kann, dass dieser beim Einkoppeln und beim Auskoppeln des Shuttles 7 in die Stütze 21 mit keinen weiteren Komponenten des Shuttles 7 oder des Lagersystems 1 kollidiert. Hierdurch wird ein einfacher, rascher, sicherer und ruckfreier Einkoppel- und Auskoppelvorgang gewährleistet.

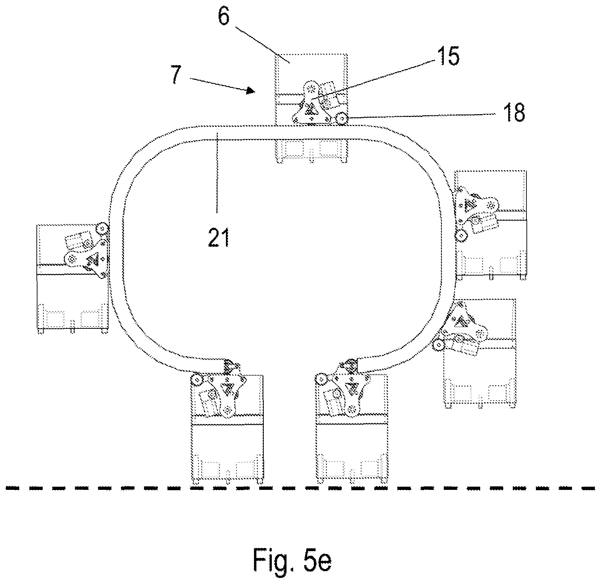

Figur 5e zeigt die Stütze 21 mit mehreren Bögen. Vorzugsweise umfasst die Stütze 21 in dieser Ausführungsvariante mehrere, wie zuvor beschriebene Bögen, welcher eine Krümmung der Stütze 21 bewirken, sodass diese zumindest abschnitts- oder punktweise parallel zum Untergrund verläuft. Der Untergrund ist in Figur 5e mit einer strichlierten Linie gekennzeichnet. Zudem kann die Stütze 21 in dem zum Untergrund parallelen Abschnitten einen Einkoppelbereich 11 umfassen, oder wie in Figur 5e gezeigt in den zum Untergrund parallelen Punkten enden. Hierdurch wird der Vorteil erreicht, dass das Shuttle 7 einfach in dem Einkoppelbereich 11, welcher parallel zum Untergrund ausgerichtet ist, in die Stütze 21 eingekoppelt, und aus dieser ausgekoppelt werden kann. Alternativ kann wie in Figur 5e gezeigt das Shuttle in den zum Untergrund parallelen Punkten einfach in die Stütze 21 eingekoppelt und aus dieser ausgekoppelt werden. Eine Stütze 21 mit mehreren Bögen kann auch so konstruiert werden, dass unterschiedliche Niveaus über dem Untergrund erreicht werden können. Des Weiteren kann hierdurch einer Überführung von Shuttles 7 zwischen mehreren verschiedenen Untergründen erreicht werden, welche auf verschiedenen Höhenniveaus liegen. Dies ist insbesondere dann sinnvoll, wenn sich das Lagersystem 1 über mehrere Hallen mit unterschiedlichen Null Niveaus erstreckt, oder um unterschiedliche Niveaus der Arbeitsplätze 20 zu erreichen.

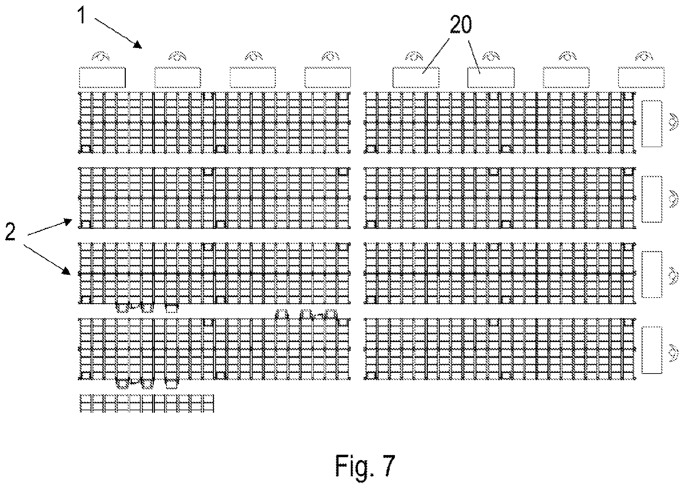

Figur 7 zeigt das automatisierte Lagersystem 1 in einer schematischen Ansicht von oben mit mehreren Arbeitsplätzen 20. Zudem sind in Figur 7 eine Mehrzahl an Shuttles 7 ersichtlich. Die Shuttles 7 transportieren hierbei Lagerhilfsmittel 6 zwischen den Arbeitsplätzen 20 und den Regalen 2 des Lagersystems 1.

Um ein Lagerhilfsmittel 6 zu einem Arbeitsplatz 20 zuzuführen und von diesem abzuführen ist in dem Lagersystem 1 vorzugsweise an jedem Arbeitsplatz 20 zumindest eine Stütze 21 mit einem Bogen gemäß den Figuren 5a bis 5e vorgesehen.

Das erfindungsgemäße Verfahren zum Einlagern oder Auslagern von Lagerhilfsmitteln 6 mit einem Shuttle 7 in ein Regal 2 des automatisierten Lagersystems 1 wird nun mit Bezug auf Figur 1 erläutert. Das Regal 2 weist, wie bereits erläutert, mehrere auf einem Untergrund aufgestellte Regalstützen 3 und mehrere vertikal übereinander angeordnete Lagerebenen 4 mit zwischen den Regalstützen 3 angeordneten Lagerplätzen 5 auf. Erfindungsgemäß weisen die Breite eines Lagerplatzes 5 begrenzende benachbarte Regalstützen 3 des Regals 2 am Untergrund eine lichte Weite auf, die kleiner als die Länge des Shuttles 7 in einer Längsachse des Shuttles 7 und größer als die Breite des Shuttles 7 in einer Querachse des Shuttles 7 ist.

Bei dem erfindungsgemäßen Verfahren wird das Regal 2 mit dem Shuttle 7 auf dem Untergrund unterfahren. Dies ist in Figur 1 ersichtlich, in welchem das zweite Shuttle 7 von links das Regal 2 unterfährt. Zudem umfasst das erfindungsgemäße Verfahren das Ankoppeln des Shuttles 7 an benachbarte Regalstützen 3. Das erste Shuttle 7 im Vordergrund in Figur 1 ist bei diesem Ankopplungsvorgang dargestellt. Zudem umfasst das erfindungsgemäße Verfahren einen vertikalen Aufstieg des Shuttles 7 an diesen benachbarten Regalstützen 3 bis auf die Höhe der Lagerebene 4 des Lagerplatzes 5 in welchen das Lagerhilfsmittel 6 eingelagert, oder aus welchem das Lagerhilfsmittel 6 ausgelagert werden soll. In Figur 1 ist das Shuttle 7 auf der linken Seite der Figur 1 bei diesem vertikalen Aufstieg gezeigt. Zudem umfasst das erfindungsgemäße Verfahren das Einlagern des Lagerhilfsmittels 6 von dem Shuttle 7 in den Lagerplatz 5 oder das Auslagern des Lagerhilfsmittels 6 aus dem Lagerplatz 5 auf das Shuttle 7, sowie einen vertikalen Abstieg des Shuttles 7 an den benachbarten Regalstützen 3 bis auf den Untergrund. Des Weiteren umfasst das erfindungsgemäße Verfahren das Herausfahren aus dem Regal 2 und/oder Hineinfahren unter das Regal 2 auf dem Untergrund durch das Shuttle 7 mit einer Fahrrichtung entlang der Längsachse des Shuttles 7. Dies ist ebenfalls in Figur 1 dargestellt, in welcher das zweite Shuttle 7 von links entlang seiner Längsachse unter das Regal 2 einfährt. Zudem umfasst das erfindungsgemäße Verfahren das Drehen des Shuttles 7 um 90 Grad außerhalb des Regals 2. Dies ist daran zu erkennen, dass das dritte Shuttle 7 und das vierte Shuttle 7 von links im Vordergrund von Figur 1 im Vergleich zum zweiten Shuttle 7 von links um 90 Grad verdreht sind. Des Weiteren umfasst das erfindungsgemäße Verfahren das Ankoppeln des Shuttles 7 durch ein Heranfahren an nur zwei der benachbarten Regalstützen 3 wobei die Längsachse des Shuttles 7 im Wesentlichen parallel zu einer Regalfront des Regals 2 positioniert wird. Wie in Figur 1 ersichtlich fährt das erste Shuttle 7 von rechts im Vordergrund an die nur zwei Regalstützen 3 heran.

Vorzugsweise wird in dem erfindungsgemäßen Verfahren das Shuttle 7 vor dem Ankoppeln an die nur zwei benachbarten Regalstützen 3 durch ein Heranfahren an die nur zwei benachbarten Regalstützen 3 mit einer Fahrtrichtung entlang der Querachse des Shuttles 7 vor die nur zwei benachbarten Regalstützen 3 positioniert. Hierdurch wird der Vorteil erreicht, dass das Shuttle direkt an die Regalstützen heranfahren und ein einfacher Mechanismus zum Ankoppeln an die beiden benachbarten Regalsteher realisiert werden kann.

Gemäß der bevorzugten Ausführungsform des erfindungsgemäßen Verfahrens wird das Shuttle 7 nach dem Drehen und vor dem Ankoppeln an die nur zwei benachbarten Regalstützen 3 mit einer Fahrt in Fahrtrichtung der Längsachse des Shuttles 7 vor die nur zwei benachbarten Regalstützen 3 positioniert. Hierdurch können auch die Regalgassen zur Fahrt des Shuttles 7 genutzt werden. Zudem können die Shuttles 7 hierdurch einander innerhalb der Regalgasse ausweichen oder aneinander vorbeifahren.

Vorzugsweise bewegt sich das Shuttle 7 nach dem Unterfahren des Regals 2 auf dem Untergrund in einem Gegenverkehrsbereich mit weiteren Shuttles 7, welche zu dem Shuttle 7 eine im Wesentlichen entgegengesetzt orientierte Fahrtrichtung aufweisen. Hierdurch kann die Fahrtrichtung der einzelnen Shuttles 7 aufeinander abgestimmt werden, und die einzelnen Shuttles 7 können sich autonom im Lagersystem 1 bewegen.

Gemäß der bevorzugten Ausführungsform des erfindungsgemäßen Verfahrens wird der vertikale Aufstieg und/oder der vertikale Abstieg des Shuttles 7 an den nur zwei benachbarten Regalstützen 3 durch eine Reibradkopplung durchgeführt. Hierdurch wird ein besonders rascher Ein- und Auskoppelvorgang mit einer konstruktiv simplen und robusten Einkopplungsmechanik gewährleistet.

Vorzugsweise weist das Shuttle 7 ein Lastaufnahmemittel 9 zur Aufnahme des Lagerhilfsmittels 6 auf, wobei beim Einlagern des Lagerhilfsmittels 6 von dem Shuttle 7 in den Lagerplatz 5 das Lastaufnahmemittel 9 mit dem von dem Lastaufnahmemittel 9 aufgenommenen Lagerhilfsmittel 6 von einer an dem Shuttle 7 vorgesehenen Führung 13 für das Lastaufnahmemittel 9 in eine an dem Lagerplatz 5 vorgesehene Führung 13 für das Lastaufnahmemittel 9 verlagert wird. Beim Auslagern des Lagerhilfsmittels 6 von dem Lagerplatz 5 auf das Shuttle 7 wird das Lagerhilfsmittel 6 von dem Lastaufnahmemittel 9 aufgenommen, und das Lastaufnahmemittel 9 wird mit dem aufgenommenen Lagerhilfsmittel 6 vorzugsweise von der an dem Lagerplatz 5 vorgesehenen Führung 13 für das Lastaufnahmemittel 9 in die an dem Shuttle 7 vorgesehene Führung 13 für das Lastaufnahmemittel 9 verlagert. Hierdurch wird sichergestellt, dass das Lagerhilfsmittel 6 sicher eingelagert und ausgelagert wird. Das Lastaufnahmemittel 9 wird zudem vorzugsweise mittels einer Steuerungseinheit in Abhängigkeit von der Position des Shuttles 7 in dem Lagersystem 1 gesteuert. Hierdurch wird die Koordination zwischen Lastaufnahmemittel 9, Lagerhilfsmittel 6 und Shuttle 7 verbessert.

## Patentansprüche

1. Verfahren zum Einlagern oder Auslagern von Lagerhilfsmitteln (6) mit einem Shuttle (7) in ein Regal (2) eines automatisierten Lagersystems (1), wobei das Regal (2) mehrere auf einem Untergrund aufgestellte Regalstützen (3) und mehrere vertikal übereinander angeordnete Lagerebenen (4) mit zwischen den Regalstützen (3) angeordneten Lagerplätzen (5) aufweist, und wobei die Breite eines Lagerplatzes (5) begrenzende benachbarte Regalstützen (3) des Regals (2) am Untergrund eine lichte Weite aufweisen, die kleiner als die Länge des Shuttles (7) in einer Längsachse des Shuttles (7) und größer als die Breite des Shuttles (7) in einer Querachse des Shuttles (7) ist, und wobei bei dem Verfahren die folgenden Schritte ausgeführt werden:
Unterfahren des Regals (2) mit dem Shuttle (7) auf dem Untergrund;
Ankoppeln des Shuttles (7) an benachbarte Regalstützen (3);
Vertikaler Aufstieg des Shuttles (7) an diesen benachbarten Regalstützen (3) bis auf die Höhe der Lagerebene (4) des Lagerplatzes (5), in welchen das Lagerhilfsmittel (6) eingelagert, oder aus welchem das Lagerhilfsmittel (6) ausgelagert werden soll;
Einlagern des Lagerhilfsmittels (6) von dem Shuttle (7) in den Lagerplatz (5) oder Auslagern des Lagerhilfsmittels (6) aus dem Lagerplatz (5) auf das Shuttle (7);
Vertikaler Abstieg des Shuttles (7) an den benachbarten Regalstützen (3) bis auf den Untergrund;
Herausfahren aus dem Regal (2) und/oder Hineinfahren unter das Regal (2) auf dem Untergrund durch das Shuttle (7) mit einer Fahrrichtung entlang der Längsachse des Shuttles (7);
**dadurch gekennzeichnet, dass** das Verfahren die folgenden weiteren Schritte umfasst:
Drehen des Shuttles (7) um 90 Grad außerhalb des Regals (2);
Ankoppeln des Shuttles (7) durch ein Heranfahren an nur zwei der benachbarten Regalstützen (3) wobei die Längsachse des Shuttles (7) im Wesentlichen parallel zu einer Regalfront des Regals (2) positioniert wird.

2. Verfahren gemäß Anspruch 1, **dadurch gekennzeichnet, dass** das Shuttle (7) vor dem Ankoppeln an die nur zwei benachbarten Regalstützen (3) durch ein Heranfahren an die nur zwei benachbarten Regalstützen (3) mit einer Fahrtrichtung entlang der Querachse des Shuttles (7) positioniert wird.

3. Verfahren gemäß einem der Ansprüche 1 oder 2, **dadurch gekennzeichnet, dass** das Shuttle (7) nach dem Drehen des Shuttles und vor dem Ankoppeln an die nur zwei benachbarten Regalstützen (3) mit einer Fahrt in Fahrtrichtung der Längsachse des Shuttles (7) vor die nur zwei benachbarten Regalstützen (3) positioniert wird.

4. Verfahren gemäß einem der Ansprüche 1 bis 3, **dadurch gekennzeichnet, dass** sich das Shuttle (7) nach dem Unterfahren des Regals (2) auf dem Untergrund in einem Gegenverkehrsbereich mit weiteren Shuttles (7) bewegt, welche zu dem Shuttle (7) eine im Wesentlichen entgegengesetzt orientierte Fahrtrichtung aufweisen.

5. Verfahren gemäß einem der Ansprüche 1 bis 4, **dadurch gekennzeichnet, dass** der vertikale Aufstieg und/oder der vertikale Abstieg des Shuttles (7) an den nur zwei benachbarten Regalstützen (3) durch eine Reibradkopplung durchgeführt wird.

6. Verfahren gemäß einem der Ansprüche 1 bis 5, **dadurch gekennzeichnet, dass** das Shuttle (7) ein Lastaufnahmemittel (9) zur Aufnahme des Lagerhilfsmittels (6) aufweist, wobei beim Einlagern des Lagerhilfsmittels (6) von dem Shuttle (7) in den Lagerplatz (5) das Lastaufnahmemittel (9) mit dem von dem Lastaufnahmemittel (9) aufgenommenen Lagerhilfsmittel (6) von einer an dem Shuttle (7) vorgesehenen Führung (13) für das Lastaufnahmemittel (9) in eine an dem Lagerplatz (5) vorgesehene Führung (13) für das Lastaufnahmemittel (9) verlagert wird.

7. Verfahren gemäß einem der Ansprüche 1 bis 6, **dadurch gekennzeichnet, dass** das Shuttle (7) ein Lastaufnahmemittel (9) zur Aufnahme des Lagerhilfsmittels (6) aufweist, wobei beim Auslagern des Lagerhilfsmittels (6) von dem Lagerplatz (5) auf das Shuttle (7) das Lagerhilfsmittel (6) von dem Lastaufnahmemittel (9) aufgenommen wird, und das Lastaufnahmemittel (9) mit dem aufgenommenen Lagerhilfsmittel (6) von einer an dem Lagerplatz (5) vorgesehenen Führung (13) für das Lastaufnahmemittel (9) in eine an dem Shuttle (7) vorgesehene Führung (13) für das Lastaufnahmemittel (9) verlagert wird.

8. Verfahren gemäß einem der Ansprüche 6 oder 7, **dadurch gekennzeichnet, dass** das Lastaufnahmemittel (9) mittels einer Steuerungseinheit in Abhängigkeit von der Position des Shuttles (7) in dem Lagersystem (1) gesteuert wird.

## Claims

1. A method of storing or retrieving storage aids (6) with a shuttle (7) in a rack (2) of an automated storage system (1), wherein the rack (2) comprises several rack supports (3) placed on a ground and several storage levels (4) arranged vertically one above the other and comprising storage spaces (5) arranged between the rack supports (3), and wherein adjacent rack supports (3) of the rack (2) which limit the width of a storage space (5) have a clear width on the ground that is smaller than the length of the shuttle (7) in a longitudinal axis of the shuttle (7) and larger than the width of the shuttle (7) in a transverse axis of the shuttle (7), and wherein the following steps are performed in the method:
moving underneath the rack (2) with the shuttle (7) on the ground;
coupling the shuttle (7) to adjacent rack supports (3);
a vertical ascent of the shuttle (7) on these adjacent rack supports (3) up to the height of the storage level (4) of the storage space (5) into which the storage aid (6) is to be stored or from which the storage aid (6) is to be retrieved;
storing the storage aid (6) from the shuttle (7) into the storage space (5) or retrieving the storage aid (6) from the storage space (5) onto the shuttle (7);
a vertical descent of the shuttle (7) on the adjacent rack supports (3) down to the ground;
moving out of the rack (2) and/or moving in under the rack (2) on the ground by the shuttle (7) with a direction of travel along the longitudinal axis of the shuttle (7);
**characterized in that** the method comprises the following further steps:
rotating the shuttle (7) by 90 degrees outside of the rack (2);
coupling the shuttle (7) by approaching only two of the adjacent rack supports (3), with the longitudinal axis of the shuttle (7) being positioned essentially in parallel to a rack front of the rack (2).

2. The method according to claim 1, **characterized in that** the shuttle (7) is positioned with a direction of travel along the transverse axis of the shuttle (7) before being coupled to the only two adjacent rack supports (3) by approaching the only two adjacent rack supports (3).

3. The method according to any of claims 1 or 2, **characterized in that** the shuttle (7) is positioned in front of the only two adjacent rack supports (3) with a movement in the direction of travel of the longitudinal axis of the shuttle (7) after the shuttle has been rotated and before it is coupled to the only two adjacent rack supports (3).

4. The method according to any of claims 1 to 3, **characterized in that**, after moving underneath the rack (2), the shuttle (7) moves on the ground in an oncoming traffic area with other shuttles (7), which have a direction of travel that is oriented essentially opposite to the shuttle (7).

5. The method according to any of claims 1 to 4, **characterized in that** the vertical ascent and/or the vertical descent of the shuttle (7) is performed on the only two adjacent rack supports (3) by means of a friction wheel coupling.

6. The method according to any of claims 1 to 5, **characterized in that** the shuttle (7) has a load handling device (9) for accommodating the storage aid (6), wherein the load handling device (9) with the storage aid (6) picked up by the load handling device (9) is moved from a guide (13) for the load handling device (9) which is provided on the shuttle (7) into a guide (13) for the load handling device (9) which is provided on the storage space (5), when the storage aid (6) is stored from the shuttle (7) into the storage space (5).

7. The method according to any of claims 1 to 6, **characterized in that** the shuttle (7) has a load handling device (9) for accommodating the storage aid (6), wherein the storage aid (6) is picked up by the load handling device (9) and the load handling device (9) with the accommodated storage aid (6) is moved from a guide (13) for the load handling device (9) which is provided on the storage space (5) into a guide (13) for the load handling device (9) which is provided on the shuttle (7), when the storage aid (6) is retrieved from the storage space (5) onto the shuttle (7).

8. The method according to any of claims 6 or 7, **characterized in that** the load handling device (9) is controlled by means of a control unit depending on the position of the shuttle (7) in the storage system (1).

## Revendications

1. Procédé de stockage ou de récupération d'auxiliaires de stockage (6) à l'aide d'une navette (7) dans un rayonnage (2) d'un système de stockage automatisé (1), le rayonnage (2) comportant plusieurs montants de rayonnage (3) placés sur un soubassement et plusieurs plans de stockage (4) superposés verticalement avec des emplacements de stockage (5) disposés entre les montants de rayonnage (3), et des montants de rayonnage (3) du rayonnage (2) délimitant la largeur d'un emplacement de stockage (5) au niveau du soubassement présentant une distance libre qui est inférieure à la longueur de la navette (7) dans un axe longitudinal de la navette (7) et supérieure à la largeur de la navette (7) dans un axe transversal de la navette, les étapes suivantes étant exécutées selon ce procédé :
passage sous le rayonnage (2) de la navette (7) sur le soubassement,
accouplement de la navette (7) à des montants de rayonnage (3) adjacents,
montée verticale de la navette (7) sur ces montants de rayonnage (3) adjacents jusqu'à la hauteur du plan de stockage (4) de l'emplacement de stockage (5) dans lequel l'auxiliaire de stockage (6) doit être stocké ou depuis lequel l'auxiliaire de stockage (6) doit être récupéré,
stockage de l'auxiliaire de stockage (6) de la navette (7) dans l'emplacement de stockage (5) ou récupération de l'auxiliaire de stockage (6) de l'emplacement de stockage (5) sur la navette (7), descente verticale de la navette (7) sur les montants de rayonnage (3) adjacents jusqu'au soubassement et
sortie du rayonnage (2) et/ou entrée sous le rayonnage (2) de la navette (7) sur le soubassement, avec une direction de déplacement le long de l'axe longitudinal de la navette (7),
**caractérisé en ce que** ce procédé comprend les autres étapes suivantes :
rotation de la navette (7) à 90 degrés à l'extérieur du rayonnage (2),
accouplement de la navette (7) en s'approchant de seulement deux des montants de rayonnage (3) adjacents, l'axe longitudinal de la navette (7) étant positionné sensiblement parallèlement à la face avant du rayonnage (2).

2. Procédé selon la revendication 1, **caractérisé en ce qu'**avant l'accouplement aux seulement deux montants de rayonnage (3) adjacents, la navette (7) se positionne par une approche des seulement deux montants de rayonnage (3) adjacents avec une direction de déplacement le long de l'axe longitudinal de la navette (7).

3. Procédé selon une des revendications 1 ou 2, **caractérisé en ce qu'**après la rotation de la navette et avant l'accouplement aux seulement deux montants de rayonnage (3) adjacents, la navette (7) se positionne devant les seulement deux montants de rayonnage (3) adjacents en se déplaçant dans la direction de l'axe longitudinal de la navette (7).

4. Procédé selon une des revendications 1 à 3, **caractérisé en ce qu'**après le passage sous le rayonnage (2) sur le soubassement, la navette (7) se déplace dans une zone de circulation en sens inverse avec d'autres navettes (7) qui présentent une direction de déplacement sensiblement opposée à la navette (7).

5. Procédé selon une des revendications 1 à 4, **caractérisé en ce que** la montée verticale et/ou la descente verticale de la navette (7) sont exécutées sur les seulement deux montants de rayonnage (3) adjacents par le biais d'un accouplement de roues de fiction.

6. Procédé selon une des revendications 1 à 5, **caractérisé en ce que** la navette (7) comporte un moyen de réception de charge (9) pour recevoir l'auxiliaire de stockage (6), le moyen de réception de charge (9) avec l'auxiliaire de charge (6) réceptionné par le moyen de réception de charge (9) étant, lors du stockage de l'auxiliaire de stockage (6) de la navette (7) dans l'emplacement de stockage (5), déplacés d'un guide (13) prévu pour le moyen de réception de charge (9) sur la navette (7) à un guide (13) prévu pour le moyen de réception de charge (9) sur l'emplacement de stockage (5).

7. Procédé selon une des revendications 1 à 6, **caractérisé en ce que** la navette (7) comporte un moyen de réception de charge (9) pour recevoir l'auxiliaire de stockage (6), l'auxiliaire de stockage (6) étant réceptionné par le moyen de réception de charge (9) lors de la récupération de l'auxiliaire de stockage (6) de l'emplacement de stockage (5) sur la navette (7), et le moyen de réception de charge (9) avec l'auxiliaire de charge (6) réceptionné étant déplacés d'un guide (13) prévu pour le moyen de réception de charge (9) sur l'emplacement de stockage (5) à un guide (13) prévu pour le moyen de réception de charge (9) sur la navette (7).

8. Procédé selon une des revendications 6 ou 7, **caractérisé en ce que** le moyen de réception de charge (9) est commandé au moyen d'une unité de commande en fonction de la position de la navette (7) dans le système de stockage (1).
